(19) Europäisches Patentamt
European Patent Office
Office européen des brevets

(11) **EP 0 480 138 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int. Cl.⁶: **B44B 3/04**, B44B 3/06, B44B 3/00

(21) Anmeldenummer: **91113081.3**

(22) Anmeldetag: **03.08.1991**

(54) **Vorrichtung zum Beschriften von gewölbten Flächen von Werkstücken**

Device for marking curved surfaces of workpieces

Dispositif pour le marquage de surfaces courbées de pièces

(84) Benannte Vertragsstaaten:
**BE DE ES FR GB IT**

(30) Priorität: **06.10.1990 DE 4031706**

(43) Veröffentlichungstag der Anmeldung:
**15.04.1992 Patentblatt 1992/16**

(73) Patentinhaber: **Baublys, Saulius**
**D-71686 Remseck (DE)**

(72) Erfinder: **Baublys, Saulius**
**D-71686 Remseck (DE)**

(74) Vertreter: **Fuhlendorf, Jörn, Dipl.-Ing. et al**
**Patentanwälte**
**Dreiss, Fuhlendorf & Steimle,**
**Gerokstrasse 6**
**70188 Stuttgart (DE)**

(56) Entgegenhaltungen:
**DE-A- 3 221 980**          **DE-A- 3 609 619**
**FR-A- 2 379 348**          **US-A- 2 110 873**
**US-A- 3 894 475**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung bezieht sich auf ein Verfahren zum Beschriften von vorzugsweise konkav gewölbten Flächen von Werkstücken, bspw. Gießformen nach dem Oberbegriff des Anspruchs 1 und auf eine Vorrichtung zur Durchführung des Verfahrens.

Bei einer aus der DE-A-33 16 355 bekannten Vorrichtung zum Beschriften von Oberflächen zylindrischer Werkstücke ist bei rotierendem Spannelement des Werkstückhalters der Schreibkopf zwar zum Werkstück hin und von diesem weg in Richtung der Tiefe der vorzunehmenden Beschriftung verfahrbar, jedoch stets unmittelbar über der Drehachse des Werkstücks ortsfest angeordnet. Auf diese Weise ist es möglich, zylindrische Oberflächen von Werkstücken über einen Teil oder auch über den gesamten Umfang des zylindrischen Werkstückes zu beschriften.

Bei einer aus der DE-A-36 09 619 bekannten Vorrichtung zum Beschriften von gewölbten Flächen von Werkstücken ist das Werkzeug gegenüber dem rotierbar eingespannten Werkstück in einer Richtung quer zur Drehachse und parallel zur Quererstreckung des Werkstücks bewegbar. Diese Bewegbarkeit des Werkzeugs dient jedoch ausschließlich der Einstellung des Werkzeugs gegenüber dem Werkstück derart, daß das Werkzeug genau über der Achse des Werkstücks angeordnet ist. Somit wird vor Beginn des Beschriftungsvorganges das Werkzeug gegenüber dem Werkstück derart eingestellt, daß die Werkstückachse und die Werkzeugrotationsachse in der dort genannten vertikalen Quermittelebene liegen. Während des Beschriftungsvorganges verändert sich an dieser Relativstellung von Werkzeug und Werkstück in Y-Richtung nichts; es wird lediglich das rotationssymmetrische Werkstück um seine Rotationsachse gedreht.

Mit einer derartigen Vorrichtung wäre es auch möglich, nicht nur konvexe Oberflächen von zylindrischen Werkstücken sondern auch konkav eingearbeitete zylindrische Innenflächen an Werkstücken zu beschriften. Nachteilig hieran ist jedoch, daß der Arbeitsbereich sich innerhalb dieser konkaven Zylinderfläche nur etwa über einen Bereich +/- 45° erstrecken kann, da in einem darüber hinausgehenden Bereich die Gefahr besteht, daß der Längsrand des Werkstücks an den Schreibkopf anschlägt. Dabei verläuft, wie bei der o.g. bekannten Vorrichtung die Gravur stets senkrecht zur Tangente an dem betreffenden Oberflächenbereich.

Diese letztgenannte stets senkrecht eingearbeitete Gravuranordnung ist dort von Nachteil, wo es sich um Werkstücke in Form von Gießformen für bspw. Glas oder auch von Reifenformen handelt. Bei derartigen Formen wird der betreffende bspw. durch Gießen geformte Gegenstand aus der beschrifteten Form in einer bestimmten Richtung bspw. in einer Richtung senkrecht zur Trennebene zweier Formhalbschalen ausgebracht bzw. entformt. Ist die Beschriftung relativ tief eingebracht und, wie oben erwähnt, stets senkrecht zur Tangente an die Werkstückoberfläche eingearbeitet, ist die Entformbarkeit insbesondere bei aus festen Materialien, wie Glas gebildeten Formstücken schlecht. Dies liegt daran, daß in den Bereichen der Gießform außerhalb der Mitte wesentliche Teile der Gravur sich in Entformungsrichtung als Hinterschneidung darstellen. Aber auch bei aus relativ elastischem Kunststoff bestehenden Formstücken ist diese Art der Beschriftung deshalb nachteilig, weil entweder die Gefahr besteht, daß durch die scharfkantige Kontur der Beschriftung erhabene Beschriftungsteile am Formstück beim Entformen beschädigt werden oder aber die Beschriftungsränder am Formenwerkstück entgratet bzw. deren Kanten gebrochen werden müssen.

Den Nachteil der schlechten Entformbarkeit von insbesondere festen Materialien könnte man zwar dadurch beheben, daß das zu beschriftende Werkstück in einer bestimmten Ebene gehalten und der Schreibkopf in dieser Ebene senkrecht zur Entformungsrichtung verfahren wird, so daß das Beschriften stets parallel zur Richtung der Entformung eines damit herzustellenden Formstückes verläuft, jedoch wird damit der erhebliche Nachteil eingehandelt, daß der Arbeitsbereich noch weiter eingeschränkt ist, nämlich im Bereich von maximal +/-30° liegt.

**Aufgabe** der vorliegenden Erfindung ist es deshalb, ein Verfahren und eine Vorrichtung zum Beschriften von vorzugsweise konkav gewölbten Flächen von Werkstücken der eingangs genannten Art zu schaffen, mit dem bzw. der es möglich ist, Werkstücke mit gewölbten Außen- und/oder Innenflächen über deren im wesentlichen gesamten Umfang zu beschriften und dabei gleichzeitig bei der Anwendung an Gießformen oder dgl. eine über die gesamte Fläche angemessene Entformbarkeit von damit auch aus festen bzw. harten Materialien herzustellender Formstücke zu erreichen.

Zur Lösung dieser Aufgabe sind bei einem Verfahren der eingangs genannten Art die im Anspruch 1 angegebenen Merkmale und bei einer Vorrichtung zur Durchführung des Verfahrens die im Anspruch 5 bzw. die im Anspruch 9 angegebenen Merkmale vorgesehen.

Durch die erfindungsgemäßen Maßnahmen wird bei der Beschriftung einer bspw. konkav gewölbten Fläche (aber auch bei der Beschriftung einer konvex gewölbten Fläche) eines Werkstückes sowohl das Werkstück um eine geeignete Achse gedreht als auch gleichzeitig in Verknüpfung mit dieser Drehbewegung der Schreibkopf in eine der Drehrichtung des Werkstücks entsprechende Richtung linear verfahren. Dadurch ist es möglich, auch bei konkav gewölbten Flächen von einem Begrenzungsrand zum anderen zu beschriften. Außerdem ist erreicht, daß die Beschriftung über die gesamte Fläche in einem zur Entformungsrichtung kleineren Winkel erfolgt, so daß die gute bzw. ausreichend gute Entformbarkeit auch von festen Materialien gewährleistet ist. Das erfindungsgemäße Verfahren kann damit in vorteilhafter Weise zum Fräsen oder Gravieren oder auch für sonstiges Beschriften von bspw. Glasgießformen, Gesenken, Erodierformen, Reifenformen und dgl. verwendet werden. Außerdem lassen sich eine Vielzahl von Materialien, wie Stahl, Aluminium, Graphit, Buntmetalle, Kunststoffe usw. bearbeiten.

Es ist nun möglich, gemäß den Merkmalen des Anspruchs 2 die Ansteuerungen beider Bewegungen derart vorzunehmen, daß zwei getrennte Antriebe zwar miteinander verknüpft aber jeweils getrennt angesteuert werden.

Gemäß einem bevorzugten Ausführungsbeispiel vorliegender Erfindung ist durch die Merkmale des Anspruchs 3 eine steuerungstechnisch einfachere Möglichkeit vorgesehen. Zweckmäßig ist es dabei, die Merkmale gemäß Anspruch 4 zu verwirklichen, da auf diese Weise primär vom Schreibkopf abgeleitet das Werkstück bewegt wird.

Gemäß den Merkmalen des Anspruchs 5 ist bei einem ersten Ausführungsbeispiel einer Vorrichtung eine konstruktiv einfache Lösung der mechanischen Kopplung von linearer Bewegung des Schreibkopfes und rotierender Bewegung des Werkstücks erreicht. Zur Anpassung an die unterschiedliche Krümmung der zu beschriftenden Flächen der Werkstücke ist das Antriebsrad auswechselbar gehalten. Zur Vermeidung von Schlupf bei der mechanischen Kupplung sind dabei die Merkmale gemäß Anspruch 6 vorgesehen. Da gemäß den Merkmalen des Anspruchs 7 der Radius des Antriebsrades in Abhängigkeit von der Krümmung und dem Austrittswinkel $\alpha$ der zu beschriftenden Fläche des Werkstücks gewählt ist, ist es notwendig, in der Wahl des entsprechenden Antriebszahnrades gewisse Kompromisse vorzunehmen. Im allgemeinen ist dies bei dem Typus der zu beschriftenden Werkstücke nicht kritisch.

Auftretende Verzerrungen im Beschriftungsbild werden durch Stauchung oder Dehnungen der gespeicherten Information für die Beschriftung kompensiert.

Eine konstruktiv günstige Lösung ergibt sich mit den Merkmalen gemäß Anspruch 8.

Insbesondere zur Beschriftung von solchen Flächen an Werkstücken, die keine von in einfacher Weise mathematisch anzugebende geometrischen Formen darstellen, sind bei einem zweiten Ausführungs beispiel der Vorrichtung die Merkmale gemäß Anspruch 9 vorgesehen. Damit ist es möglich, vor der Beschriftung durch den Schreibkopf die zu beschriftende Fläche am Werkstück mit dem Abtastgerät zu erfassen. Durch das Einschwenken von Abtastgerät oder Schreibkopf über dem zu beschriftenden Werkstück ist eine schnelle und einfache Handhabung der Vorrichtung gegeben. Die programmgemäße Ansteuerung bzw. Überlagerung der beiden genannten Bewegungen erfolgt dabei unter Zurhilfenahme der mathematisch erfaßten zu beschriftenden Oberfläche bzw. der Meßwerte des Abtastgerätes.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:

Figur 1      in schematischer Vorderansicht eine Vorrichtung zum Beschriften von gewölbten Flächen von Werkstücken gemäß einem bevorzugten Ausführungsbeispiel vorliegender Erfindung,

Figur 2      eine Seitenansicht gemäß Pfeil II der Fig. 1,

Figur 3      in vergrößerter Darstellung den Werkzeug/Werkstück-Bereich entsprechend Fig. 1 in einer Mittelstellung und

Figur 4      eine der Fig. 3 entsprechende Darstellung, jedoch in einer Arbeitsstellung mit maximal gedrehtem Werkzeug und verfahrenem Werkzeug.

Die in der Zeichnung dargestellte Vorrichtung 10 dient zum Beschriften einer hier inneren, konkav gewölbten Oberfläche 12 eines Werkstücks 11 mit Hilfe eines Schreibkopfes 13. Wenn auch hier die Beschriftung einer konkav gewölbten Fläche 12 beschrieben ist, versteht es sich, daß auch konvex gewölbte äußere Oberflächen an Werkstücken in dieser Weise beschriftet werden können. Die Oberflächen 12 können in beliebiger Weise gewölbt sein, d.h., ihre Flächen müssen nicht durch eine einfache mathematische Beziehung, wie bspw. die Zylinderform angebbar sein. Beim Ausführungsbeispiel ist das Werkstück 11 eine Halbschale einer Gießform zum Herstellen bzw. Abgießen von Glasflaschen. Es versteht sich, daß die erfindungsgemäße Vorrichtung 10 auch zum Beschriften anderer Werkstücke, wie bspw. von Gesenken, Erodierformen, von Reifenformen und dgl. geeignet ist. Als Schreibkopf kann bspw. ein Fräser oder eine Graviernadel vorgesehen sein. Mit der erfindungsgemäßen Vorrichtung 10 lassen sich Stahl, Aluminium, Graphit, Buntmetalle, Kunststoffe und dgl. bearbeiten bzw. beschriften.

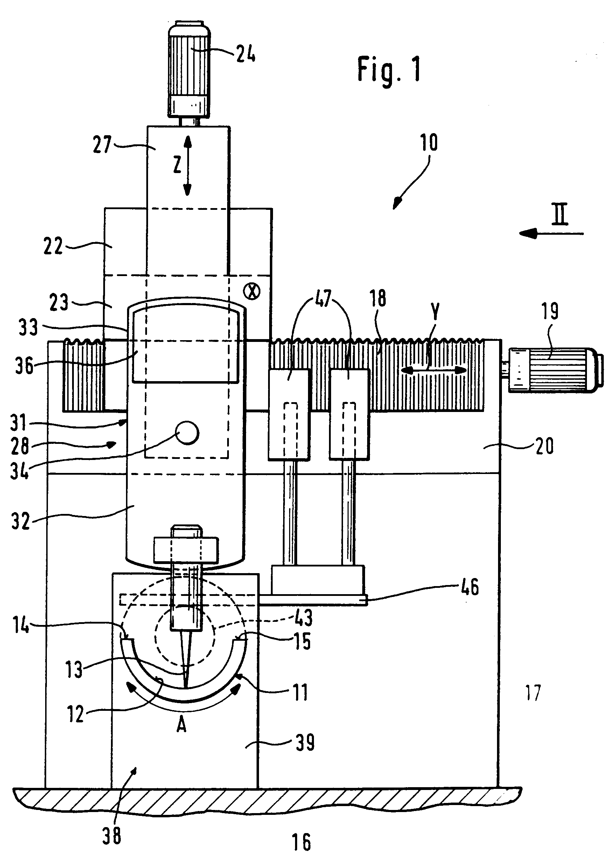

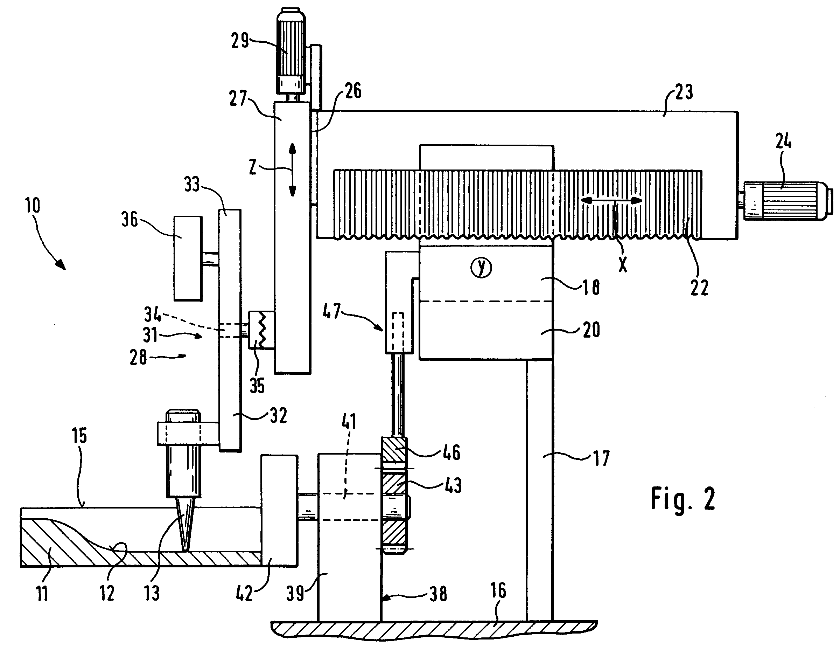

Gemäß den Fig. 1 und 2 besitzt die Vorrichtung 10 einen an einer Grundplatte 16 angeordneten, senkrecht nach oben abstehenden Ständer 17, an dessen erster Führung 20 ein erster Schlitten 18 über einen Schrittmotor 19 (AC- oder DC-Motor) in einer horizontalen Ebene, wie sie mit dem Doppelpfeil Y bezeichnet ist, verfahrbar ist. Auf dem ersten Schlitten 18 ist eine zweite Führung 23 befestigt, längs der ein zweiter Schlitten 22 in ebenfalls horizontaler Ebene, jedoch senkrecht zum ersten Schlitten 18 gemäß dem mit X bezeichneten Doppelpfeil verfahrbar ist. Auch der zweite Schlitten ist von einem Schrittmotor 24 (AC- oder DC-Motor) angetrieben. An dem dem Schrittmotor 24 abgewandten Ende des zweiten Schlittens 22 ist eine senkrechte Führung 26 befestigt, längs der ein dritter Schlitten 27 mittels eines Schrittmotors 29 (AC- oder DC-Motor) in vertikaler Richtung gemäß dem Doppelpfeil Z auf und ab verfahrbar ist. Am dritten Schlitten 27 ist ein Werkzeughalter 28 für den Schreibkopf 13 befestigt.

Der Werkzeughalter 28 besitzt einen zweiarmigen Hebel 31, dessen Arme 32 und 33 diametral einander gegenüberliegen und der um eine horizontale Achse 34 um hier mindestens 180° in die eine und/oder andere Richtung gegenüber dem dritten Schlitten 27 schwenkbar ist. An dem einen Hebelarm 32 ist der Schreibkopf 13 befestigt, während am anderen Hebelarm 33 ein optisches Abtastgerät 36 bspw. in Form eines Lasergerätes befestigt ist, dessen Funktion weiter unten erläutert werden wird. Die Schwenkverbindung ist über Stirnzahnräder 35 mit Hirthverzahnung gegeben. Die Schenkbewegung kann von Hand oder fremdangetrieben erfolgen. Es versteht sich, daß die beiden Arme 32, 33 des Hebels 31 auch jeden beliebigen, vorzugsweise stumpfen Winkel zwischen sich einschließen können.

Auf der Grundplatte 16 ist ein Werkstückhalter 38 befestigt. Der Werkstückhalter 38 besitzt einen aufrechtstehenden Lagerbock 39, der von einer horizontalen Welle 41 durchdrungen ist, an deren einem Ende ein Aufspannelement 42 bspw. in Form eines magnetischen Aufspannelementes drehfest gehalten ist. Am Aufspannelement 42 ist in Richtung der Drehachse das Werkstück 11 derart aufgespannt, daß es im Bereich unterhalb des Werkzeughalters 28 angeordnet ist. Das aus dem dem Aufspannelement 42 gegenüberliegenden Ende des Lagerbocks 38 herausragende Ende der Welle 41 ist mit einem Zahnrad 42 bestückt. Das Zahnrad 43 ist an der Welle 41 zwar drehfest, jedoch abnehmbar bzw. auswechselbar angeordnet.

Mit dem Zahnrad 43 kämmt eine Zahnstange 46, die am ersten Schlitten 18 befestigt ist und sich in Richtung parallel zur mit dem Doppelpfeil Y gekennzeichneten Richtung, also der Bewegungsrichtung des ersten Schlittens 18 erstreckt. Die Zahnstange 46 ist mittels Pneumatik- oder Hydraulikelemente 47 auf und ab bewegbar, derart, daß sie aus dem Bereich des Zahnrades 43 zu dessen Auswechseln abhebbar ist und unter ihrem Eigengewicht auf das Zahnrad 43 wieder auflegbar ist, wobei sie ggf. von dem Hydraulikelementen 47 unter geringem Druck gegen das Zahnrad 43 drückbar ist.

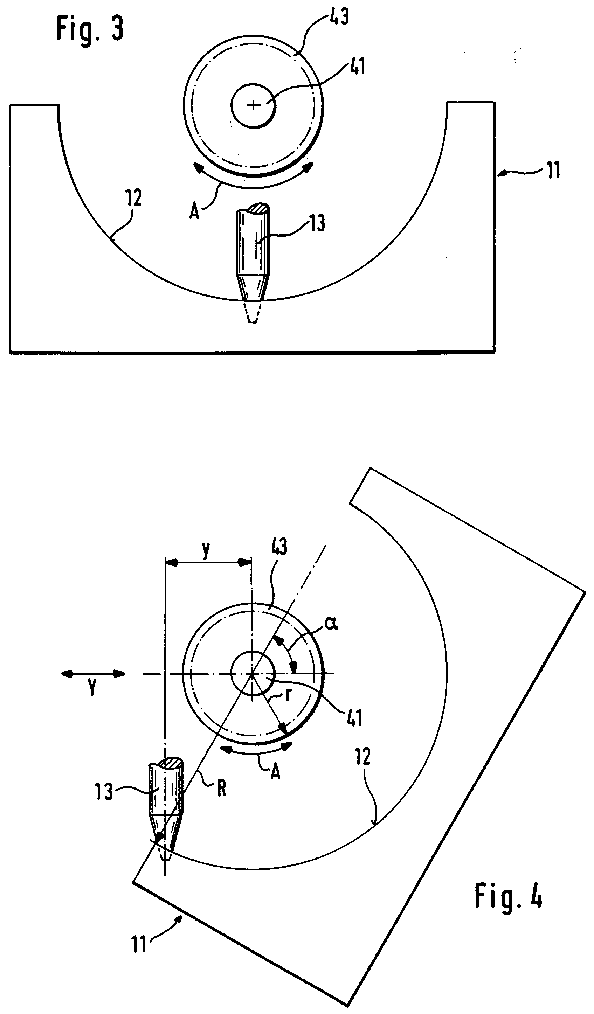

Dadurch ergibt sich eine mechanische Bewegungskopplung zwischen dem in Y-Richtung und damit quer zur Drehachse des Werkstücks 11 verfahrbaren ersten Schlitten 18 und dem im Werkstückhalter 38 drehbar gelagerten Werkstück 11. Um die gewölbte Oberfläche 12 des Werkstücks 11 von einer Längskante 14 zur gegenüberliegenden Längskante 15 beschriften zu können, ist eine Abstimmung der linearen Bewegung des Schreibkopfes 13 in Y-Richtung und der Drehbewegung des Werkstücks 11 in der durch den Doppelpfeil A angedeuteten Drehrichtung erforderlich. Anhand der Fig. 3 und 4 läßt sich die Beziehung der mechanischen Bewegungsübertragung bzw. die Größe des auswechselbar gehaltenen Zahnrades 43 in Abhängigkeit vom Krümmungsradius bzw. einem mittleren Krümmungsradius der zu beschriftenden Oberfläche 12 des Werkstücks 11 herleiten.

Wird der Schreibkopf 13 aus der Mittellage nach Fig. 3 in die in Fig. 4 dargestellte Lage maximal verfahren, ergibt sich der verfahrene Weg y in Abhängigkeit vom Krümmungsradius des Werkstücks 11 und des Drehwinkels bzw. Austrittswinkels $\alpha$ näherungsweise zu

$$y = R \cdot \cos \alpha .$$

Aus der Beziehung

$$\frac{\alpha°}{y} = \frac{360°}{2\pi r}$$

ergibt sich bei r = dem Radius des zu verwendenden Zahnrades, die Beziehung

$$r = \frac{360}{2\pi\alpha} \cdot R \cdot \cos \alpha$$

Daraus ergibt sich durch Bestimmung des Krümmungsradius der zu beschriftenden Oberfläche 12 und daraus des maximalen Schwenkwinkels die Größe des Zahnrades 43. In der Praxis wird ein Zahnrad 43 verwendet, das handelsüblich ist und dem errechneten Zahnrad-Radius am nächsten kommt. Ergeben sich dadurch Verzerrungen in der einen oder anderen Richtung des Schriftbildes, weil das tatsächlich verwendete Zahnrad nicht dem errechneten Maß für das Zahnrad entspricht, so ist es möglich, das gespeicherte Schriftbild, das für die Ansteuerung der für die Bewegung des Schreibkopfes 13 verantwortlichen Schlitten 1 und 2 verwendet wird, entsprechend zu verzerren (dehnen oder komprimieren), so daß sich mit der Beschriftung das gewünschte Schriftbild ergibt.

Daraus ist auch ersichtlich, daß je nach Krümmungsradius oder mittlerem Krümmungsradius der zu beschriftenden Oberfläche 12 ein Zahnrad 43 mit entsprechender Zähnezahl eingesetzt werden kann, das jeweils mit derselben Zahnstange 46 kämmt. Auf diese Weise erhält man eine Beschriftung, deren Achse in Richtung der Schrifttiefe sich unter einem Winkel von kleiner 90° zur Tangente an den betreffenden Krümmungsbereich, also unter einem nur kleinen Winkel zur Richtung der Entformung eines Formstückes aus dem Werkstück 11 erstreckt. Es versteht sich, daß der Schreibkopf 13 in Z-Richtung entsprechend dem Verlauf der Oberfläche 12 derart angesteuert bewegt, daß eine gleichmäßige oder gewünschte Beschriftungstiefe gewährleistet ist.

Die Beschriftung eines bestimmten gekrümmten Flächenbereichs der Oberfläche 12 des Werkstücks 11 erfolgt entweder jeweils von der Mittellage aus zur einen und anderen Längskante 14, 15 hin oder aber ausgehend von einer der Längskanten 14, 15 zur jeweils anderen hin. Es versteht sich, daß dabei der Schreibkopf 13 in Z-Richtung entsprechend dem Verlauf des zu beschriftenden Bereichs der Oberfläche 12 derart angesteuert bewegt wird, daß eine gleichmäßige oder gewünschte ungleichmäßige Beschriftungstiefe gewährleistet ist. Außerdem wird dem Schreibkopf 13 bei dem Herstellen der Beschriftung in vorgegebener Weise eine Bewegung in X-Richtung, also in Richtung der Drehachse des Werkstücks 11 überlagert.

Ist die zu beschriftende Oberfläche 12 des Werkstücks 11 durch eine in einfacher Weise mathematisch zu bestimmende Form, wie bspw. die Zylinderform, gegeben, so ist es möglich, diese mathematisch bestimmte Form der Oberfläche in das Programm zur Ansteuerung des Schreibkopfes 13 einzugeben. Ist dagegen die Form der zu beschriftenden Oberfläche 12 komplizierter, so daß es zu aufwendig ist, diese Form mathematisch zu bestimmen, ist es zweckmäßig, die Form vor dem Beschriftungsvorgang durch das vorne genannte Abtastgerät 36 zu bestimmen. Dazu wird der zweiarmige Hebel 31 um hier 180° verschwenkt, so daß dem Abtastgerät 36 die zu beschriftende Oberfläche 12 gegenüber liegt. Durch Verfahren des Abtastgerätes 36 mittels Ansteuerung des ersten Schlittens 18 in Y-Richtung und damit durch die mechanisch gekoppelte Drehbewegung des Werkstücks 11 in Richtung A kann die Oberfläche 12 rasterartig in bestimmten Abständen erfaßt und abgespeichert werden. Es versteht sich, daß dabei auch der zweiten Schlitten 22 in X-Richtung verfahren wird. Dieses so abgetastete und gespeicherte Bild der Oberfläche 12 wird dann zusammen mit dem Programm für das herzustellende Schriftbild verarbeitet, so daß der Schreibkopf 13, nachdem dieser über den Hebel 31 in seine Arbeitsposition gebracht worden ist, entsprechend verfahren wird.

Bei der in der Zeichnung dargestellten flaschenartigen Form des Werkstücks 11 ist es möglich, die Bereiche kleineren Krümmungsradius mit einem anderen Zahnrad zu bestücken als im Falle eines größeren Krümmungsradius. Es ist aber auch möglich, beim Übergang vom einen zum anderen Krümmungsradius im Beschriftungsprogramm eine entsprechende Stauchung oder Dehnung der Beschriftung vorzugeben, um ein Auswechseln des Zahnrades zu vermeiden.

Gemäß einem nicht im einzelnen dargestellten anderen Ausführungsbeispiel vorliegender Erfindung erfolgt die Abstimmung der einander überlagerten linearen Bewegung des ersten Schlittens in Y-Richtung und der Drehbewegung des Werkstücks 11 in Richtung A nicht in einer mechanisch gekoppelten Weise, sondern durch Ansteuerung mittels eines Programms, das von einem Rechner verarbeitet wird, der auch zur Speicherung und Ansteuerung des Schreibkopfes 13 zur Durchführung der Beschriftung verwendet wird. Die programmgemäße Ansteuerung bzw. Überlagerung der beiden genannten Bewegungen erfolgt unter Zurhilfenahme der mathematisch erfaßten zu beschriftenden Oberfläche 12 bzw. der Meßwerte des Abtastgerätes 36.

## Patentansprüche

1. Verfahren zum Beschriften von gewölbten Flächen (12), die vorzugsweise konkav ausgebildet sind, von Werkstücken (11), bspw. Gießformen, bei dem ein Werkzeughalter (28) mit einem Schreibkopf (13) in den drei zueinander senkrechten Ebenen bewegt und mit einem Werkstückhalter (38) das zu beschriftende Werkstück (11) um eine Achse (41) gedreht wird, wobei während des Beschriftungsvorganges der Drehbewegung des zu beschriftenden Werkstücks (11) eine lineare Bewegung des Schreibkopfs (13) in einer Richtung senkrecht zur Drehachse und parallel zur Quererstreckung des Werkstücks (11) überlagert wird, wobei die Drehbewegung und die lineare Bewegung in vorbestimmter Weise miteinander verknüpft werden.

2. Verfahren nach Anspruch 1, dadurch gekennzeichnet, daß die Ansteuerung der linearen Bewegung und die Ansteuerung der Drehbewegung programmäßig verknüpft werden.

3. Verfahren nach Anspruch 1, dadurch gekennzeichnet, daß die Ansteuerung der einen Bewegung von der angesteuerten anderen Bewegung mechanisch abgenommen wird.

4. Verfahren nach Anspruch 3, dadurch gekennzeichnet, daß die Drehbewegung des zu beschriftenden Werkstücks (11) von der linearen Bewegung mechanisch abgenommen wird.

5. Vorrichtung zur Durchführung des Verfahrens nach den Ansprüchen 1 und 3 und/oder 4, bei dem ein Werkzeughalter mit einem Schreibkopf in drei zueinander senkrechten Ebenen verfahrbar ist, dadurch gekennzeichnet, daß der an einem Aufspanntisch (39) ortsfest angeordnete Werkstückhalter (38) mit einem drehbar gelagerten Spannelement (42) versehen ist, das mit einem auswechselbar gehaltenen koaxialen Antriebsrad (43) drehfest verbunden ist, das mit einer zur Achse des Antriebsrades senkrecht verlaufenden linearen Abrollbahn (46) in Wirkverbindung ist und daß die Abrollbahn (46) mit einem in der betreffenden linearen Bahn verfahrbaren ersten Schlitten (18) bewegungsschlüssig so verbunden ist, daß der Drehbewegung des zu beschriftenden Werkstücks eine lineare Bewegung in einer Richtung parallel zur Quererstreckung des Werkstücks überlagert wird und die Abrollbahn gegenüber dem Antriebsrad (43) anhebbar und absenkbar ist.

6. Vorrichtung nach Anspruch 5, dadurch gekennzeichnet, daß das Antriebsrad ein Zahnrad (43) und die Abrollbahn eine Zahnstange (46) ist.

7. Vorrichtung nach Anspruch 5 oder 6, dadurch gekennzeichnet, daß der Radius des Antriebsrades (43) in Abhängigkeit von der Krümmung und dem Austrittswinkel α der zu beschriftenden Fläche (12) des Werkstücks (11) gewählt ist.

8. Vorrichtung nach mindestens einem der vorhergehenden Ansprüche, dadurch gekennzeichnet, daß der Schreibkopf (13) an einem dritten Schlitten (27), der in Richtung der Tiefe der herzustellenden Beschriftung verfahrbar ist, bewegungsschlüssig gehalten ist, daß der dritte Schlitten (27) an einem mit dem ersten Schlitten (18) verfahrbaren zweiten Schlitten (22) gehalten ist, der in Richtung der Drehachse (41) des Werkstücks (11) verfahrbar ist.

9. Vorrichtung nach Anspruch 5, dadurch gekennzeichnet, daß der Schreibkopf (13) am einen Arm (32) eines Schwenkelementes (31), der um eine Achse (34) parallel zur Drehachse (41) des Werkstückhalters (38) schwenkbar ist, befestigt ist, daß am anderen Arm (33) des Schwenkelementes (31) ein vorzugsweise optisches Abtastgerät (36) zum Erfassen der zu beschriftenden Fläche (12) des Werkstücks (11) gehalten ist und daß für die lineare Bewegung und die Drehbewegung zwei getrennte Antriebe vorgesehen sind.

## Claims

1. A method for inscribing curved, preferably concave, surfaces (12) of workpieces (11), such as casting molds, in which a tool holder (28) with a writing head (13) is moved in the three planes at right angles to one another and the workpiece (11) to be inscribed is rotated about an axis (41) by a workpiece holder (38), wherein during the inscription operation a linear motion of the writing head (13) in a direction at right angles to the axis of rotation and parallel to the transverse extension of the workpiece (11) is superimposed on the rotational motion of the workpiece (11) to be inscribed, wherein the rotary motion and the linear motion are linked together in a predetermined manner.

2. The method of claim 1, characterized in that the triggering of the linear motion and the triggering of the rotary motion are linked in programmed fashion.

3. The method of claim 1, characterized in that the triggering of the one motion is mechanically picked up from the triggered other motion.

4. The method of claim 3, characterized in that the rotary motion of the workpiece (11) to be inscribed is mechanically picked up from the linear motion.

5. An apparatus for performing the method of claims 1 and 3 and/or 4, in which a tool holder with a writing head is movable in tree planes at right angles to one another, characterized in that the workpiece holder (38), disposed stationary on a clamping table (39), is provided with a rotatably supported clamp element (42), which is connected in a manner fixed against relative rotation to an interchangeably retained coaxial drive wheel (43) that is operatively connected to a linear track (46) extending at right angles to the axis of the drive wheel, and that the track (46) is connected for positive motion in such a way to a first carriage (18), which is movable in the applicable linear path, that a linear motion in a direction parallel to the transverse extension of the workpiece is superimposed on the rotary motion of the workpiece to be inscribed, and the track is raisable and lowerable relative to the drive wheel (43).

6. The apparatus of claim 5, characterized in that the drive wheel is a gear wheel (43) and the track is a toothed rack (46).

7. The apparatus of claim 5 or 6, characterized in that the radius of the drive wheel (43) is selected as a function of the curvature and the exit angle α of the surface (12) to be inscribed on the workpiece (11).

8. The apparatus of at least one of the foregoing claims, characterized in that the writing head (13) is mounted for positive motion on a third carriage (27), which is movable in the direction of the depth of the inscription to be made; that the third carriage (27) is mounted on a second carriage (22) movable with the first carriage (18), which second carriage is movable in the direction of the axis of rotation (41) of the workpiece (11).

9. The apparatus of claim 5, characterized in that the writing head (13) is secured to an arm (32) of a pivot element (31), which is pivotable about an axis (34) parallel to the axis of rotation (41) of the workpiece holder (38); that a preferably optical scanner device (36) for detecting the surface (12) to be inscribed of the workpiece (11) is mounted on the other arm (33) of the pivot element (31); and that two separate drives are provided for the linear motion and the rotary motion.

## Revendications

1. Procédé de marquage de surfaces courbées (12), de préférence concaves, de pièces (11), par exemple de moules, dans lequel un porte-outil (28) portant une tête de marquage (13) est déplacé dans trois plans orthogonaux, la pièce à marquer (11) étant entraînée en rotation autour d'un axe (41) au moyen d'un support de pièce (38), un mouvement linéaire de la tête de marquage (13) perpendiculairement à l'axe de rotation et parallèlement à la dimension transversale de la pièce (11) étant superposé audit mouvement de rotation de la pièce à marquer (11) pendant le processus de marquage, le mouvement rotatif et le mouvement linéaire étant liés entre eux de manière prédéterminée.

2. Procédé selon la revendication 1, caractérisé en ce que la commande du mouvement linéaire et la commande du mouvement de rotation sont liées par programme.

3. Procédé selon la revendication 1, caractérisé en ce que la commande de l'un des mouvements est liée mécaniquement à l'autre mouvement commandé.

4. Procédé selon la revendication 3, caractérisé en ce que le mouvement de rotation de la pièce à marquer (11) est lié mécaniquement au mouvement linéaire.

5. Dispositif permettant de mettre en oeuvre le procédé selon les revendications 1 et 3 et/ou 4, dans lequel un porte-outil peut être déplacé avec une tête de marquage dans trois plans orthogonaux, caractérisé en ce que le support de pièce (38) agencé fixement sur un positionneur (39) est doté d'un élément de serrage (42) monté rotatif et solidaire en rotation d'une roue d'entraînement (43) coaxiale, échangeable qui est en liaison positive avec un cercle de roulement (46) linéaire perpendiculaire à l'axe de la roue de commande et en ce que le cercle de roulement (46) est relié à un premier chariot (18) solidaire en mouvement et mobile sur la trajectoire linéaire en question de sorte qu'au mouvement de rotation de la pièce à marquer est superposé un mouvement linéaire parallèle à la dimension transversale de la pièce et que le cercle de roulement peut être élevé ou abaissé par rapport à la roue de commande (43).

6. Dispositif selon la revendication 5, caractérisé en ce que la roue de commande consiste en une roue dentée (43) et le cercle de roulement en une crémaillère (46).

7. Dispositif selon la revendication 5 ou 6, caractérisé en ce que le rayon de la roue de commande (43) est choisi en fonction de la courbure et de l'angle d'émergence $\alpha$ de la surface (12) à marquer de la pièce (11).

8. Dispositif selon au moins l'une des revendications précédentes, caractérisé en ce que la tête de marquage (13) est maintenue solidaire en mouvement sur un troisième chariot (27) mobile dans la direction de la profondeur du marquage à réaliser, en ce que le troisième chariot (27) est maintenu sur un deuxième chariot (22) solidaire en mouvement du premier chariot (18), ledit deuxième chariot étant mobile dans la direction de l'axe de rotation (41) de la pièce (11).

9. Dispositif selon la revendication 5, caractérisé en ce que la tête de marquage (13) est montée sur un bras (32) d'un élément pivotant (31), libre de pivoter de pivoter autour d'un axe (34) parallèlement à l'axe de rotation (41) du support de pièce (38), en ce que sur l'autre bras (33) de l'élément pivotant (31) est monté un détecteur (36), de préférence optique, pour explorer la surface (12) à marquer de la pièce (11) et en ce que deux entraînements séparés sont prévus pour le mouvement linéaire et pour le mouvement de rotation.

Fig. 1

Fig. 2

Fig. 3

Fig. 4